# EUROPEAN PATENT SPECIFICATION

(11) **EP 1 595 859 B1**
(45) Date of publication and mention of the grant of the patent: **19.12.2007**
(21) Application number: 05252382.6
(22) Date of filing: 15.04.2005
(51) Int. Cl.: C04B 41/87, C04B 41/89, C23C 4/10, F01D 5/28

(54) **Article comprising a substrate comprising silicon and a top barrier layer comprising hafnium oxide**
Gegenstand umfassend ein Silizium enthaltendes Substrat und eine Hafniumoxid enthaltende Sperrschicht an der Oberfläche
Article comprenant un substrat contenant du silicium et une surcouche barrière contenant de l'oxyde de hafnium

(30) Priority: 13.05.2004 US 846968
(43) Date of publication of application: 16.11.2005
(73) Proprietor: United Technologies Corporation, Hartford, CT 06101 (US)
(72) Inventor: Bhatia, Tania, Middletown, Connecticut 06457 (US); Sun, Ellen Y, South Windsor, Connecticut 06074 (US)
(74) Representative: Hall, Matthew Benjamin

(56) References cited:
- US-B1- 6 733 908
- ZHU D, BANSAL N P, MILLER R A: "Thermal conductivity and stability of hafnia- and zirconate based materials for advanced 1650 .degree.C thermal/environmental barrier coating applications" NASA/TM-2003-212544, November 2003 (2003-11), pages 1-10, XP002373322

## Description

The present invention relates to an article comprising a substrate containing silicon and a top barrier layer which functions as a protective environmental/thermal barrier coating and, more particularly, a top barrier layer which inhibits the formation of gaseous species of Si, particularly Si(OH)ₓ when the article is exposed to high temperature, aqueous (steam) environments.

Ceramic materials containing silicon have been proposed for structures used in high temperature applications as, for example, gas turbine engines, heat exchangers, internal combustion engines, and the like. A particularly useful application for these materials is for use in gas turbine engines which operate at high temperatures water vapor rich environments. It has been found that these silicon containing substrates can recede and lose mass as a result of a formation volatile Si species, particularly Si(OH)ₓ and SiO when exposed to high temperature, high velocity and high pressure steam as is found in gas turbines engines. For example, silicon carbide components when exposed to both fuel lean and fuel rich combustion environments of approximately 10 Atm total pressure at 1200°C with gas velocities ranging 30-90 m/s will exhibit weight loss and recession at a rate of approximately 0.025-0.38 mm (10-15 mils) per 1000 hrs. It is believed that the process involves oxidation of the silicon carbide to form silica on the surface of the silicon carbide followed by reaction of the silica with steam to form volatile species of silicon such as Si(OH). Alkaline-earth aluminosilicates of barium, strontuim and mixtures thereof such as Barium Strontium Alumino Silicate (BSAS), are current state-of-the art top layer candidates and are the subject of many patents and technical literature in the area of environmental barrier coatings. It has been found that BSAS recedes at a finite rate in engine conditions (typically around 9 µm/1000 hrs around 1200 °C.

Naturally it would be highly desirable to provide a top external barrier coating for silicon containing substrates which would inhibit the formation of volatile silicon species, Si(OH)ₓ and SiO, and thereby reduce recession and mass loss.

Accordingly, it is the principle object of the present invention to provide an article comprising a silicon containing substrate with a top barrier layer which inhibits the formation of gaseous species of Si, particularly Si(OH)ₓ, when the article is exposed to a high temperature, steam environment.

A second object of this invention is to provide an article comprising a substrate with a top barrier layer providing thermal/environmental protection, such top layer closely matching the coefficient of thermal expansion of the substrate.

It is a further object of the present invention to provide a method for producing an article as aforesaid.

US 6733908 discloses a multilayer system for protecting components exposed to severe environmental and thermal conditions, comprising a substrate, a bond layer, a mullite-containing intermediate layer, an outer chemical barrier layer and a top layer comprising stabilised zirconia. The substrate may be fibre-reinforced SiC and the outer chemical barrier layer may comprise hafnia.

"Thermal conductivity and stability of Hafnia and zirconate-based materials for advanced 1650°C Thermal/Environmental barrier coating applications", D.Zhu et al, NASA/TM-2003-212544 discloses an article comprising: a ceramic substrate comprising silicon; and a top barrier layer comprising at least 75 mol % hafnium oxide. The present invention is characterised in that said hafnium oxide, which is present in an amount of at least 65 mol % in the top barrier layer, is monoclinic hafnium oxide, said top barrier layer has a coefficient of thermal expansion which is within ± 3.0 ppm/°C of the coefficient of thermal expansion of the substrate, and wherein the top barrier layer inhibits the formation of gaseous species of Si when the article is exposed to a high temperature, aqueous environment.

Preferably, the top barrier layer functions to both inhibit the formation of undesirable gaseous species of silicon when the article is exposed to a high temperature, steam environment and to provide thermal protection. By high temperatures is meant the temperature at which the Si in the substrate forms Si(OH)ₓ and/or SiO in an aqueous environment. By aqueous environment is meant a high pressure/high velocity water vapor environment. The substrate is preferably monolithic silicon carbide, silicon nitride, or composites of silicon carbide and silicon nitride. In a preferred embodiment of the present invention the article can include one or more intermediate layers between the silicon based substrate and the top barrier layer. The intermediate layer(s) serve(s) to provide enhanced adherence between the top barrier layer and the substrate and/or to prevent reactions between the top barrier layer and the substrate.

The present invention also provides a method for preparing an article. "Thermal conductivity and stability of Hafnia and zirconate-based materials for advanced 1650°C Thermal/Environmental barrier coating applications", D.Zhu et al, NASA/TM-2003-212544 discloses a method for preparing an article comprising the steps of: providing a ceramic substrate comprising silicon; and applying a top barrier layer comprising at least 75 mol % hafnium oxide to the substrate. The present invention is characterised in that said hafnium oxide, which is present in an amount of at least 65 mol % in the top barrier layer, is monoclinic hafnium oxide, said top barrier layer has a coefficient of thermal expansion which is within ± 3.0 ppm/°C of the coefficient of thermal expansion of the substrate, and wherein the top barrier layer inhibits the formation of gaseous species of Si when the article is exposed to a high temperature, aqueous environment

Preferably, the top barrier layer inhibits the formation of gaseous species of silicon and/or provides thermal protection when the article is exposed to a high temperature, aqueous environment as defined above.

Preferred embodiments of the present invention will now be described by way of example only and with reference to the accompanying drawings in which:
Figure 1 is a graph showing the stability of the top barrier layer of a preferred embodiment of the present invention with respect to recession and mass loss; and
Figure 2 is a photomicrograph through a top barrier layer in accordance with a preferred embodiment of the present invention on a silicon carbide substrate (SiC fiber reinforced SiC matrix composite).

The present invention relates to an article comprising a silicon substrate and a top barrier layer, wherein the top barrier layer inhibits the formation of gaseous species of silicon when the article is exposed to a high temperature, aqueous environment. The invention also relates to a method for producing the aforesaid article. In addition, it should be appreciated that while the top layer is particularly directed to an environmental barrier layer, the top layer also functions as a thermal barrier layer and thus the present invention broadly encompasses the use of environmental/thermal top barrier layers on silicon containing substrates.

The silicon containing substrate is a silicon containing ceramic material as, for example, silicon carbide and silicon nitride. In accordance with a particular embodiment of the present invention, the silicon containing ceramic substrate comprises a silicon containing matrix with reinforcing materials such as fibers, particles and the like and, more particularly, a silicon based matrix which is fiber-reinforced. In another embodiment of the invention, the Si containing ceramic substrate might be monolithic silicon carbide or silicon nitride.

In a particular embodiment, the top barrier layer further comprises up to 30 mol % of at least one of an oxide selected from the group consisting of oxides of Zr, Ti, Nb, Ta, Ce and mixtures thereof, balance hafnium oxide. In a further embodiment, the top layer comprises up to 5 mol % of at least one of an oxide selected from the group consisting of oxides of rare earth elements, Y, Sc, Al, Si and mixtures thereof, balance hafnium oxide. In a still further embodiment, the top barrier layer comprises up to 30 mol % of at least one of an oxide selected from the group consisting of oxides of Zr, Ti, Nb, Ta, Ce and mixtures thereof; up to 5 mol % of at least one of an oxide selected from the group consisting of oxides of rare earth elements, Y, Sc and mixtures thereof; and balance hafnium oxide. Particularly useful rare earth elements include La, Gd, Sm, Lu, Yb, Er, Pr, Pm, Dy, Ho, Eu and mixtures thereof.

It is an important feature of the present invention to maintain compatibility between the coefficient of thermal expansion of the silicon containing substrate and the top barrier layer and any intermediate layer(s). In accordance with the present invention it has been found that the coefficient of thermal expansion of the top barrier layer should be within ± 3.0 ppm per degrees centigrade, preferably ± 2.0 ppm per degrees centigrade, of the coefficient of thermal expansion of the silicon containing substrate. When using a silicon containing ceramic substrate such as a silicon carbide matrix or a silicon nitride matrix with or without reinforcing fibers as described above in combination with the monoclinic hafnium oxide top barrier layer of the present invention, the desired compatibility with respect to expansion coefficient between the silicon containing substrate and the top barrier layer should be ± 2.00 ppm per degrees centigrade.

The top barrier layer should be present in the article at a thickness of greater than or equal to about 0.013 mm (0.5 mils), preferably between about 0.05 to about 0.76 mm (between about 2 to about 30 mils) and ideally between about 0.076 to about 0.127 mm (between about 3 to about 5 mils). The top barrier layer may be applied to the silicon containing substrate by any suitable manner known in the art, such as, thermal spraying, slurry coating, vapor deposition (chemical and physical). In a further embodiment of the article of the present invention, an intermediate layer can be provided between the silicon containing substrate and the top barrier layer. The intermediate layer(s) serve(s) to provide enhanced adhesion between the top barrier layer and the substrate and/or to prevent reactions between the top barrier layer and the substrate. The intermediate layer consists of, for example, a layer selected from the group consisting of HfSiO₄, BaSiO₂; SrSiO₂, aluminum silicate, yttrium silicate, rare earth silicates, mullite, alkaline earth aluminosilicates of barium strontium, and mixtures thereof. The intermediate layer could also consist of a mixture of Si and HfO₂ and/or HfSiO₄. The thickness of the intermediate layer is typical to those described above with regard to the top barrier layer and the intermediate layer may likewise be disposed in any manner known in the prior art as described herein below with regard to the top barrier layer. In addition to the intermediate layer, a bond layer may be provided between the silicon containing substrate and the top barrier layer or, if used, the intermediate layer. A suitable bond layer comprises silicon metal in a thickness of up to 0.15 mm (6 mils). Another manifestation of the bond layer could include a mixture of Si and HfO₂ and/or HfSiO₄.

The method of the present invention comprises providing a silicon containing substrate and applying a top barrier layer wherein the top barrier layer inhibits the formation of gaseous species of silicon when the article is exposed to a high temperature, aqueous environment. In accordance with one embodiment of the present invention the top barrier layer can be applied by thermal spraying. It has been found that the top barrier layer may be sprayed at room temperature. However, when the substrate is heated, the quality of the coating is enhanced. Thermal sprayed of between about 400°C to 1200°C helps equilibrate as-sprayed, splat quenched, microstructure and to provide a means to manage stresses which control delamination.

The silicon bond layer may be applied directly to the surface of the silicon containing substrate by thermal spraying at approximately 870°C to a thickness of up to 0.15 mm (6 mils).

The intermediate layer may be applied between the substrate and the top barrier layer or between the bond layer and top barrier layer by thermal spraying in the same manner described above with respect to the top barrier layer. As noted above, the preferred intermediate layers comprise HfSiO, BaSiO₂, SrSiO₂, aluminum silicate, yttrium silicate, rare earth silicates, barium strontium aluminosilicate, mullite-barium strontium aluminosilicate and mixtures thereof.

The advantages of the article of the present invention will become clear from consideration of the following example.

### Example 1 (outside of the invention)

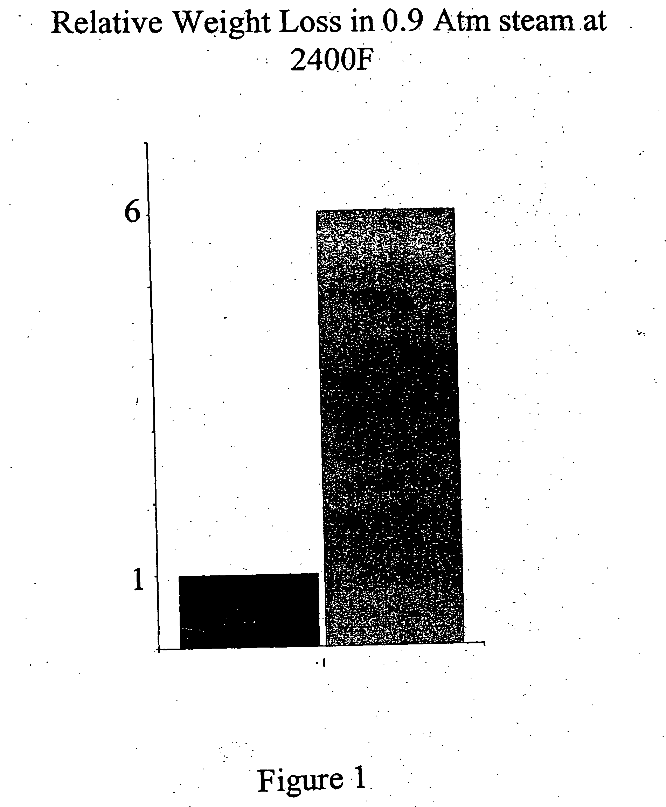

Dense samples of HfO2 was prepared by hot pressing HfO2 powders in a 7.6 x 7.6 cm (3x3") square panels in a graphite die. The powders were consolidated using a pressure of 3 ksi to a temperature of 1600°C for 2 hours. The heat up rates used were 10°C/min. Post hot-pressing, the sample was heat treated to 1600°C/50 hrs in air. In addition, dense samples of BSAS was prepared by hot pressing pre-reacted BSAS (BaAl2Si2O8) powders in a 7.6 x 7.6 cm (3x3") square panels in a graphite die. The powders were consolidated using a pressure of 4 ksi to a temperature of 1400°C for 2 hours. The heat up rates used were 15°C/min. Post hot-pressing, the sample was heat treated to 1500°C/50 hrs in air. Rectangular Samples of HfO₂ and BSAS were cut out of the hot-pressed and heat treated panels and suspended in a furnace with flowing steam (90% steam). The temperature of the exposure was 1315°C. Samples were periodically removed and weighed. The weight loss is converted into a recession rate based on the density of the material and the dimensions of the samples and the relative values reported in Figure 1 are after 500 hours of exposure. As can be seen, the HfO₂ exhibits a significant improvement over BSAS.

### Example 2

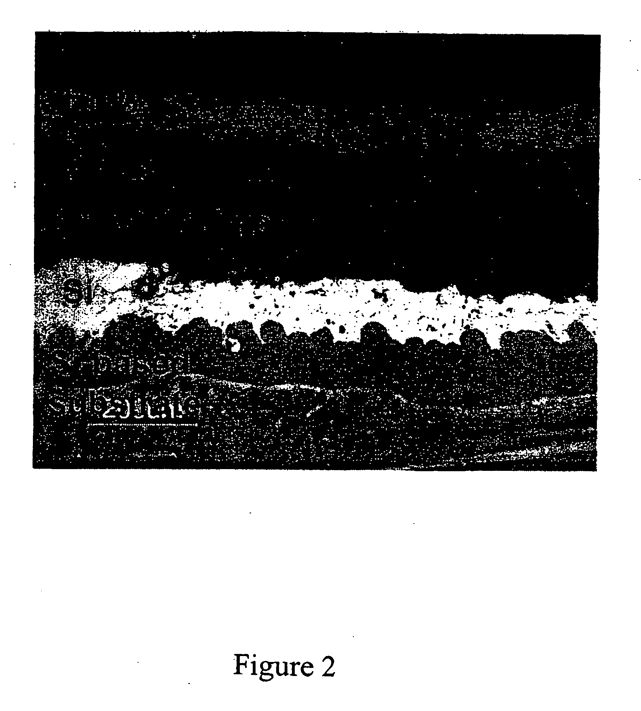

Multi layer EBC shown in Figure 2 was prepared by Air Plasma Spray (APS). The substrate was held at a temperature of between 650 and 1100°C during the application of the entire coating system. The first 3 layers is a standard 3-layer BSAS based EBC with a Si bond coat a mixed mullite/BSAS intermediate layer (80% mullite and 20% BSAS) and a BSAS top layer. The first 3-layers were allowed to soak in the furnace at temperature of 1100°C for approximately 1½ hour before the application of the Hf02 layer for the structure to crystallize and equilibrate. The Hf02 was applied at when the substrate was at 1100°C. Post spraying the coating went through a 1250°C/24 hr heat treat. XRD confirmed the coating to be monoclinic Hf02. The coatings were layers were approximately 0.10 - 0.13 mm (4-5mils) each and were well adhered to each other.

This invention may be embodied in other forms or carried out in other ways without departing from the essential characteristics thereof. The present embodiment is therefore to be considered as in all respects illustrative and not restrictive, the scope of the invention being indicated by the appended claims.

## Claims

1. An article comprising:
a ceramic substrate comprising silicon; and
a top barrier layer comprising at least 65 mol % hafnium oxide, **characterised in that** said hafnium oxide is monoclinic hafnium oxide, said top barrier layer has a coefficient of thermal expansion which is within ± 3.0 ppm/°C of the coefficient of thermal expansion of the substrate, and wherein the top barrier layer inhibits the formation of gaseous species of Si when the article is exposed to a high temperature, aqueous environment.

2. An article as claimed in claim 1, wherein the substrate is a silicon containing ceramic selected from the group consisting of silicon carbide and silicon nitride.

3. An article as claimed in claim 1, wherein the substrate is a composite comprising a silicon based matrix and a reinforcing particle.

4. An article as claimed in claim 3, wherein said substrate is selected from the group consisting of silicon carbide fiber-reinforced silicon carbide matrix, carbon fiber-reinforced silicon carbide matrix and silicon carbide fiber-reinforced silicon nitride and silicon nitride reinforced SiC.

5. An article as claimed in any preceding claim, wherein the top barrier layer further comprises up to 30 mol % of at least one of an oxide selected from the group consisting of oxides of Zr, Ti, Nb, Ta, Ce and mixtures thereof.

6. An article as claimed in any preceding claim, wherein the top barrier layer further comprises up to 5 mol % of at least one of an oxide selected from the group consisting of oxides of rare earth elements, Y, Sc, Al, Si and mixtures thereof.

7. An article as claimed in claim 6, wherein the rare earth elements are selected from the group consisting of La, Gd, Sm, Lu, Yb, Er, Pr, Pm, Dy, Ho, Eu and mixtures thereof.

8. An article as claimed in any preceding claim, wherein the coefficient of thermal expansion of the top barrier layer is within ± 2.0 ppm/°C the coefficient of thermal expansion of the substrate.

9. An article as claimed in any preceding claim, wherein the top barrier layer has a thickness of ≥ 0.013mm (0.5 mils), preferably 0.076-0.127mm (3-5 mils).

10. An article as claimed in any preceding claim, including a bond layer on the substrate.

11. An article as claimed in claim 10, wherein the bond layer comprises silicon metal, or a mixture of Si and HfO₂ and/or HfSiO₄.

12. An article as claimed in any preceding claim, including an intermediate layer.

13. An article as claimed in claim 12, wherein said intermediate layer is selected from the group consisting of HfSiO₄, BaSiO₂, SrSiO₂, aluminum silicate, yttrium silicate, rare earth silicates, Alkaline earth aluminosilicates (Alkaline earth = Ba, Sr and mixtures), mullite-barium strontium aluminosilicate and mixtures thereof.

14. An article as claimed in claim 13, wherein the intermediate layer comprises HfSiO₄ or a mixture of silicon metal and HfO₂ and/or HfSiO₄.

15. An article as claimed in any of claims 12 to 14, wherein the intermediate layer has a thickness of ≥ 0.013 mm (0.5 mils).

16. An article as claimed in any preceding claim, wherein the top barrier layer has a thickness of between about 0.076 - 0.762 mm (3 to 30 mils).

17. An article as claimed in any of claims 1 to 15, wherein the top barrier layer has a thickness of between about up to 0.127 mm (5 mils).

18. An article as claimed in any of claims 12 to 17, wherein the intermediate layer has a thickness of 0.076 - 0.760 mm (3 to 30 mils).

19. An article as claimed in any of claims 12 to 17, wherein the intermediate layer has a thickness of 0.076 - 0.127 mm (3 to 5 mils).

20. An article as claimed in any of claims 10 to 19, wherein the bond layer has a thickness of between about 0.076 - 0.152 mm (3 to 6 mils).

21. A method for preparing an article comprising the steps of:
providing a ceramic substrate comprising silicon; and
applying a top barrier layer comprising at least 65 mol % hafnium oxide to the substrate, **characterised in that** said hafnium oxide is monoclinic hafnium oxide, said top barrier layer has a coefficient of thermal expansion which is within ± 3.0 ppm/°C of the coefficient of thermal expansion of the substrate, and wherein the top barrier layer inhibits the formation of gaseous species of Si when the article is exposed to a high temperature, aqueous environment.

22. A method as claimed in claim 21, wherein the coefficient of thermal expansion of the top barrier layer is within ± 0.5 ppm/°C the coefficient of thermal expansion of the substrate.

23. A method as claimed in claim 21 or 22, including applying the top barrier layer by thermal spraying.

24. A method as claimed in any of claims 21 to 23, wherein the top barrier layer comprises up to 30 mol % of at least one of an oxide selected from the group consisting of oxides of Zr, Ti, Nb, Ta, Ce and mixtures thereof.

25. A method as claimed in any of claims 21 to 24, wherein the top barrier layer further comprises up to 5 mol % of at least one of an oxide selected from the group consisting of oxides of rare earth elements, Y, Sc, Al, Si and mixtures thereof.

26. A method as claimed in claim 25, wherein the rare earth elements are selected from the group consisting of La, Gd, Sm, Lu, Yb , Er, Pr, Pm, Dy, Ho, Eu and mixtures thereof.

27. A method as claimed in any of claims 21 to 26, including a bond layer on the substrate.

28. A method as claimed in any of claims 21 to 27, including an intermediate layer.

## Patentansprüche

1. Gegenstand, aufweisend:
ein Keramiksubstrat, das Silicium aufweist; und
eine Deck-Barriereschicht, die mindestens 65 Mol-% Hafniumoxid aufweist, **dadurch gekennzeichnet, dass** das Hafniumoxid monoklines Hafniumoxid ist, wobei die Deck-Barriereschicht einen Wärmeausdehnungskoeffizienten hat, der innerhalb von ± 3,0 ppm/°C des Wärmeausdehnungskoeffizienten des Substrats liegt, und wobei die Deck-Barriereschicht die Bildung gasförmiger Spezies von Si hemmt, wenn der Gegenstand einer wasserhaltigen Umgebung hoher Temperatur ausgesetzt wird.

2. Gegenstand wie in Anspruch 1 beansprucht, bei dem das Substrat eine Silicium enthaltende Keramik ist, die ausgewählt ist aus der Gruppe, die aus Siliciumcarbid und Siliciumnitrid besteht.

3. Gegenstand wie in Anspruch 1 beansprucht, bei dem das Substrat ein Verbundstoff ist, der eine Matrix auf Siliciumbasis und ein Verstärkungspartikel aufweist.

4. Gegenstand wie in Anspruch 3 beansprucht, bei dem das Substrat ausgewählt ist aus der Gruppe, die aus einer Siliciumcarbidfaser-verstärkten Siliciumcarbidmatrix, einer Kohlefaser-verstärkten Siliciumcarbidmatrix und Siliciumcarbidfaser-verstärktem Siliciumnitrid und Siliciumnitrid-verstärktem SiC besteht.

5. Gegenstand wie in irgendeinem vorangehenden Anspruch beansprucht, bei dem die Deck-Barriereschicht außerdem bis zu 30 Mol-% mindestens eines Oxids, das ausgewählt ist aus der Gruppe, die aus Oxiden von Zr, Ti, Nb, Ta, Ce und Gemischen davon besteht, aufweist.

6. Gegenstand wie in irgendeinem vorangehenden Anspruch beansprucht, bei dem die Deck-Barriereschicht außerdem bis zu 5 Mol-% mindestens eines Oxids, das ausgewählt ist aus der Gruppe, die aus Oxiden von Seltenerdelementen, Y, Sc, Al, Si und Gemischen davon besteht, aufweist.

7. Gegenstand wie in Anspruch 6 beansprucht, bei dem die Seitenerdelemente ausgewählt sind aus der Gruppe, die aus La, Gd, Sm, Lu, Yb, Er, Pr, Pm, Dy, Ho, Eu und Gemischen davon besteht.

8. Gegenstand wie in irgendeinem vorangehenden Anspruch beansprucht, bei dem der Wärmeausdehnungskoeffizient der Deck-Barriereschicht innerhalb von ± 2,0 ppm/°C des Wärmeausdehnungskoeffizienten des Substrats liegt.

9. Gegenstand wie in irgendeinem vorangehenden Anspruch beansprucht, bei dem die Deck-Barriereschicht eine Dicke von ? 0.013 mm (0,5 Mil), bevorzugt 0,076 bis 0.127 mm (3 bis 5 Mil), hat.

10. Gegenstand wie in irgendeinem vorangehenden Anspruch beansprucht, der eine Bindungsschicht auf dem Substrat hat.

11. Gegenstand wie in Anspruch 10 beansprucht, bei dem die Bindungsschicht Siliciummetall oder ein Gemisch von Si und HfO₂ und/oder HfSiO₄ aufweist.

12. Gegenstand wie in irgendeinem vorangehenden Anspruch beansprucht, der eine Zwischenschicht hat.

13. Gegenstand wie in Anspruch 12 beansprucht, bei dem die Zwischenschicht ausgewählt ist aus der Gruppe, die aus HfSiO₄, BaSiO₂, SrSiO₂, Aluminiumsilicat, Yttriumsilicat, Seltenerdsilicaten, Erdalkali-Aluminiumsilicaten (Erdalkali = Ba, Sr und Gemische), Mullit-Barium-Strontium-Aluminiumsilicat und Gemischen davon besteht.

14. Gegenstand wie in Anspruch 13 beansprucht, bei dem die Zwischenschicht HfSiO₄ oder ein Gemisch von Siliciummetall und HfO₂ und/oder HfSiO₄ aufweist.

15. Gegenstand wie in irgendeinem der Ansprüche 12 bis 14 beansprucht, bei dem die Zwischenschicht eine Dicke von ? 0,013 mm (0,5 Mil) hat.

16. Gegenstand wie in irgendeinem vorangehenden Anspruch beansprucht, bei dem die Deck-Barriereschicht eine Dicke von zwischen etwa 0,076 bis 0,762 mm (3 bis 30 Mil) hat.

17. Gegenstand wie in irgendeinem der Ansprüche 1 bis 15 beansprucht, bei dem die Deck-Barriereschicht eine Dicke von zwischen etwa bis zu 0,127 mm (5 Mil) hat.

18. Gegenstand wie in irgendeinem der Ansprüche 12 bis 17 beansprucht, bei dem die Zwischenschicht eine Dicke von 0,076 bis 0,760 mm (3 bis 30 Mil) hat.

19. Gegenstand wie in irgendeinem der Ansprüche 12 bis 17 beansprucht, bei dem die Zwischenschicht eine Dicke von 0,076 bis 0,127 mm (3 bis 5 Mil) hat.

20. Gegenstand wie in irgendeinem der Ansprüche 10 bis 19 beansprucht, bei dem die Bindungsschicht eine Dicke von zwischen etwa 0,076 bis 0,152 mm (3 bis 6 Mil) hat.

21. Verfahren zur Herstellung eines Gegenstands, folgende Schritte aufweisend:
Bereitstellen eines Keramiksubstrats, das Silicium aufweist: und
Auftragen einer Deck-Barriereschicht, die mindestens 65 Mol-% Hafniumoxid aufweist, auf das Substrat, **dadurch gekennzeichnet, dass** das Hafniumoxid monoklines Hafniumoxid ist, die Deck-Barriereschicht einen Wärmeausdehnungskoeffizienten hat, der innerhalb von ± 3,0 ppm/°C des Wärmeausdehnungskoeffizienten des Substrats liegt, und wobei die Deck-Barriereschicht die Bildung gasförmiger Spezies von Si hemmt, wenn der Gegenstand einer wasserhaltigen Umgebung hoher Temperatur ausgesetzt wird.

22. Verfahren wie in Anspruch 21 beansprucht, bei dem der Wärmeausdehnungskoeffizient der Deck-Barriereschicht innerhalb von ± 0,5 ppm/°C des Wärmeausdehnungskoeffizienten des Substrats liegt.

23. Verfahren wie in Anspruch 21 oder 22 beansprucht, umfassend ein Auftragen der Deck-Barriereschicht durch thermisches Spritzen.

24. Verfahren wie in irgendeinem der Ansprüche 21 bis 23 beansprucht, bei dem die Deck-Barriereschicht bis zu 30 Mol-% mindestens eines Oxids aufweist, das ausgewählt wird aus der Gruppe, die aus Oxiden von Zr, Ti, Nb, Ta, Ce und Gemischen davon besteht.

25. Verfahren wie in irgendeinem der Ansprüche 21 bis 24 beansprucht, bei dem die Deck-Barriereschicht außerdem bis zu 5 Mol-% mindestens eines Oxids aufweist, das ausgewählt wird aus der Gruppe, die aus Oxiden von Seltenerdelementen, Y. Sc, Al, Si und Gemischen davon besteht.

26. Verfahren wie in Anspruch 25 beansprucht, bei dem die Seltenerdelemente ausgewählt werden aus der Gruppe, die aus La, Gd, Sm, Lu, Yb, Er, Pr, Pm, Dy, Ho, Eu und Gemischen davon besteht.

27. Verfahren wie in irgendeinem der Ansprüche 21 bis 26 beansprucht, eine Bindungsschicht auf dem Substrat beinhaltend.

28. Verfahren wie in irgendeinem der Ansprüche 21 bis 27 beansprucht, eine Zwischenschicht beinhaltend.

## Revendications

1. Article comprenant :
un substrat céramique comprenant du silicium ; et
une couche de surface formant une barrière comprenant au moins 65 % en moles d'oxyde d'hafnium, **caractérisé en ce que** ledit oxyde d'hafnium est un oxyde d'hafnium monoclinique, ladite couche de surface formant une barrière a un coefficient d'expansion thermique qui est dans la plage de ± 3,0 ppm/°C du coefficient d'expansion thermique du substrat, et dans lequel la couche de surface formant une barrière inhibe la formation d'espèces gazeuses de Si lorsque l'article est exposé à un environnement aqueux à une température élevée.

2. Article selon la revendication 1, dans lequel le substrat est une céramique contenant du silicium sélectionnée dans le groupe constitué par le carbure de silicium et le nitrure de silicium.

3. Article selon la revendication 1, dans lequel le substrat est un composite comprenant une matrice à base de silicium et une particule de renforcement.

4. Article selon la revendication 3, dans lequel le substrat est sélectionné dans le groupe constitué par une matrice de carbure de silicium renforcée par une fibre de carbure de silicium, une matrice de carbure de silicium renforcée par une fibre de carbone et un nitrure de silicium renforcé par une fibre de carbure de silicium et un carbure de silicium (SiC) renforcé par du nitrure de silicium.

5. Article selon l'une quelconque des revendications précédentes, dans lequel la couche de surface formant une barrière comprend en outre jusqu'à 30 % en moles d'au moins un oxyde sélectionné dans le groupe constitué par les oxydes de Zr, Ti, Nb, Ta, Ce et des mélanges de ceux-ci.

6. Article selon l'une quelconque des revendications précédentes, dans lequel la couche de surface formant une barrière comprend en outre jusqu'à 5 % en moles d'au moins un oxyde sélectionné dans le groupe constitué par les oxydes d'éléments de terre rare, Y, Sc, Al, Si et de mélanges de ceux-ci.

7. Article selon la revendication 6, dans lequel les éléments de terre rare sont sélectionnés dans le groupe constitué par La, Gd, Sm, Lu, Yb, Er, Pr, Pm, Dy, Ho, Eu et des mélanges de ceux-ci.

8. Article selon l'une quelconque des revendications précédentes, dans lequel le coefficient d'expansion thermique de la couche de surface formant une barrière est dans la plage de ± 2,0 ppm/°C du coefficient d'expansion thermique du substrat

9. Article selon l'une quelconque des revendications précédentes, dans lequel la couche de surface formant une barrière a une épaisseur ≥ 0,013 mm (0,5 millièmes de pouce), de préférence de 0,076 à 0,127 mm (3 à 5 millièmes de pouce).

10. Article selon l'une quelconque des revendications précédentes, incluant une couche de liaison sur le substrat.

11. Article selon la revendication 10, dans lequel la couche de liaison comprend un métal de silicium, ou un mélange de Si et de HfO₂ et/ou HfSiO₄.

12. Article selon l'une quelconque des revendications précédentes, incluant une couche intermédiaire.

13. Article selon la revendication 12, dans lequel ladite couche intermédiaire est sélectionnée dans le groupe constitué par HfSiO₄, BaSiO₂, SrSiO₂, le silicate d'aluminium, le silicate d'yttrium, les silicates de terre rare, les aluminosilicates de métal alcalino-terreux (métaux alcalino-terreux = Ba, Sr et des mélanges), l'aluminosilicate de mullite-baryum-strontium et des mélanges de ceux-ci.

14. Article selon la revendication 13, dans lequel la couche intermédiaire comprend HfSiO₄ ou un mélange de métal de silicium et de HfO₂ et/ou HfSiO₄.

15. Article selon l'une quelconque des revendications 12 à 14, dans lequel la couche intermédiaire a une épaisseur ≥ 0,013 mm (0,5 millièmes de pouce).

16. Article selon l'une quelconque des revendications précédentes, dans lequel la couche de surface formant une barrière a une épaisseur d'environ 0,076 à 0,762 mm (3 à 30 millièmes de pouce).

17. Article selon l'une quelconque des revendications 1 à 15, dans lequel la couche de surface formant une barrière a une épaisseur allant jusqu'à environ 0,127 mm (5 millièmes de pouce).

18. Article selon l'une quelconque des revendications 12 à 17, dans lequel la couche intermédiaire a une épaisseur de 0,076 à 0,760 mm (3 à 30 millièmes de pouce).

19. Article selon l'une quelconque des revendications 12 à 17, dans lequel la couche intermédiaire a une épaisseur de 0,076 à 0,127 mm (3 à 5 millièmes de pouce).

20. Article selon l'une quelconque des revendications 10 à 19, dans lequel la couche de liaison a une épaisseur d'environ 0,076 à 0,152 mm (3 à 6 millièmes de pouce).

21. Procédé de préparation d'un article comprenant les étapes de :
fournir un substrat céramique comprenant du silicium ; et
appliquer une couche de surface formant une barrière comprenant au moins 65 % en moles d'oxyde d'hafnium, **caractérisé en ce que** ledit oxyde d'hafnium est un oxyde d'hafnium monoclinique, ladite couche de surface formant une barrière a un coefficient d'expansion thermique qui est dans la plage de ± 3,0 ppm/°C du coefficient d'expansion thermique du substrat, et dans lequel la couche de surface formant une barrière inhibe la formation d'espèces gazeuses de Si lorsque l'article est exposé à un environnement aqueux à une température élevée.

22. Procédé selon la revendication 21, dans lequel le coefficient d'expansion thermique de la couche de surface formant une barrière est dans la plage de ± 0,5 ppm/°C du coefficient d'expansion thermique du substrat.

23. Procédé selon la revendication 21 ou 22, incluant l'application de la couche de surface formant une barrière par pulvérisation thermique.

24. Procédé selon l'une quelconque des revendications 21 à 23, dans lequel la couche de surface formant une barrière comprend jusqu'à 30 % en moles d'au moins un oxyde sélectionné dans le groupe constitué par les oxydes de Zr, Ti, Nb, Ta, Ce et des mélanges de ceux-ci.

25. Procédé selon l'une quelconque des revendications 21 à 24, dans lequel la couche de surface formant une barrière comprend en outre jusqu'à 5 % en moles d'au moins un oxyde sélectionné dans le groupe constitué par les oxydes d'éléments de terre rare, Y, Sc, Al, Si et de mélanges de ceux-ci.

26. Procédé selon la revendication 25, dans lequel les éléments de terre rare sont sélectionnés dans le groupe constitué par La, Gd, Sm, Lu, Yb, Er, Pr, Pm, Dy, Ho, Eu et des mélanges de ceux-ci.

27. Procédé selon l'une quelconque des revendications 21 à 26, incluant une couche de liaison sur le substrat.

28. Procédé selon l'une quelconque des revendications 21 à 27, incluant une couche intermédiaire.
